# FASCICULE DE BREVET EUROPEEN

(11) **EP 1 022 495 B1**
(45) Date de publication et mention de la délivrance du brevet: **17.12.2003**
(21) Numéro de dépôt: 00400161.6
(22) Date de dépôt: 21.01.2000
(51) Int. Cl.: F16H 63/30

(54) **Boîte de vitesses à marche arrière synchronisée**
Wechselgetriebe mit synchronisiertem Rückwärtsgang
Gearbox with synchronized reverse gear

(30) Priorité: 21.01.1999 FR 9900644
(43) Date de publication de la demande: 26.07.2000
(73) Titulaire: Renault s.a.s., 92100 Boulogne Billancourt (FR)
(72) Inventeur: Schaeffer, Nicolas, 27440 Gaillardbois (FR)

(56) Documents cités:
- EP-A- 0 459 859
- WO-A-96/10705
- DE-A- 3 600 185
- FR-A- 2 702 263

## Description

L'invention concerne une boîte de vitesses de véhicule automobile.

L'invention concerne plus particulièrement une boîte de vitesses d'automobile à au moins deux arbres parallèles axiaux primaire et secondaire, comportant au moins un pignon fou qui est susceptible d'être synchronisé puis accouplé en rotation à l'arbre primaire par des moyens de crabotage et de synchronisation à coulissement axial pour définir un rapport de marche avant, au moins un pignon fixe qui est destiné à engrener avec un pignon fixe de l'arbre secondaire par l'intermédiaire d'un pignon intermédiaire mobile comportant des moyens de crabotage, un baladeur associé au rapport de marche arrière qui est monté coulissant et pivotant suivant une direction transversale pour qu'au moins un bras radial du baladeur sélectionne en coulissant et engage en pivotant le rapport de marche arrière en coopérant avec les moyens de crabotage du pignon intermédiaire, le baladeur associé au rapport de marche arrière et les moyens de crabotage et de synchronisation du pignon fou de marche avant comportant un dispositif à cliquet qui entraîne partiellement en coulissement axial un coulisseau de commande des moyens de crabotage et de synchronisation du pignon fou de marche avant sans le craboter seulement lors de l'engagement du rapport de marche arrière.

On connaît de nombreux exemples de boîtes de vitesses du type décrit ci-dessus.

D'une manière générale, le crabotage d'un pignon intermédiaire associé à un rapport de transmission de marche arrière, est, dans une boîte de vitesses, généralement obtenu par déplacement axial du pignon considéré de façon qu'il réalise une liaison en rotation entre deux pignons fixes respectifs de l'arbre primaire et de l'arbre secondaire. A cet effet, le pignon intermédiaire de marche arrière engrène en permanence avec un pignon fixe de l'arbre primaire, et est susceptible d'être craboté sur le pignon fixe de l'arbre secondaire.

Pour réaliser un tel crabotage, le pignon intermédiaire et le pignon fixe de l'arbre secondaire sont nécessairement des pignons à denture droite, ce qui, lors de l'opération de crabotage, rend leur engrènement particulièrement délicat.

En effet, l'opération de crabotage du pignon de marche arrière intervient après que le conducteur a désaccouplé l'arbre primaire du moteur du véhicule en agissant sur l'embrayage du véhicule. Du fait des inerties des masses en rotation portées par l'arbre primaire, comme par exemple les pignons des rapports de marche avant et l'embrayage, l'arbre primaire continue à tourner à une vitesse de rotation supérieure à la vitesse idéale de crabotage du pignon de marche arrière.

On estime ainsi que l'arbre primaire continue de tourner à une vitesse proche de celle du ralenti du moteur, soit environ 800 tours par minute, pendant plusieurs secondes après le désaccouplement de l'arbre primaire.

Or, on estime aussi que pour réaliser un crabotage silencieux et sans effort important du pignon intermédiaire de marche arrière, la vitesse différentielle, ou différence de vitesse de rotation entre le pignon de marche arrière et le pignon fixe de l'arbre secondaire avec lequel il engrène, doit être inférieure à 150 tours par minute.

Lorsque cette condition n'est pas réalisée, et que le vitesse différentielle est supérieure à 150 tours par minute, le crabotage du pignon intermédiaire de marche arrière s'accompagne de craquements désagréables pour le conducteur du véhicule et peut même conduire à une détérioration des dentures du pignon intermédiaire de marche arrière et du pignons fixe de l'arbre secondaire.

Pour remédier à cet inconvénient, on a imaginé de freiner le pignon intermédiaire de marche arrière et par conséquent l'arbre primaire en dotant le pignon intermédiaire de marche arrière d'un dispositif de freinage, réalisé par exemple par une portée conique du pignon intermédiaire de marche arrière coopérant avec une portée conique portée par le carter de la boîte de vitesses.

Cette solution est coûteuse et, du fait de l'échauffement des portées coniques en contact, tend à les coller l'une à l'autre, ce qui est préjudiciable à un bon crabotage du pignon intermédiaire de marche arrière.

Pour remédier à cet inconvénient, on a imaginé des dispositifs permettant de freiner l'arbre primaire, en utilisant un dispositif de synchronisation d'un autre pignon de l'arbre primaire, et notamment un pignon fou associé à un rapport de marche avant, qui permet de ramener la vitesse de l'arbre primaire à celle de l'arbre secondaire, c'est à dire une vitesse de rotation pratiquement nulle.

Un tel agencement est décrit et représenté dans le document FR-A-2.662.775.

Ce document décrit et représente un dispositif qui comporte un doigt de sélection qui est susceptible de venir en regard d'un premier coulisseau commandant les moyens de crabotage du pignon intermédiaire de marche arrière, et de le déplacer axialement pour réaliser le crabotage du pignon intermédiaire de marche arrière. Lorsque le doigt de sélection est amené en regard du premier coulisseau, il repousse simultanément et partiellement un second coulisseau, qui coulisse sur le premier dans le sens opposé et commande les moyens de crabotage et de synchronisation d'un pignon fou du quatrième rapport de marche avant. Ceci a pour effet, en n'entraînant que les moyens de synchronisation du pignon fou du quatrième rapport de marche avant sans le craboter, de ralentir l'arbre primaire avant le crabotage du pignon intermédiaire de marche arrière.

Ce dispositif présente un premier inconvénient qui réside dans l'importance des surfaces de contact mises en jeu par les coulisseaux en contact mutuel. Des grandes surfaces de contact sont nécessaires pour assurer un guidage correct des coulisseaux, mais risquent aussi d'entraîner un collage des coulisseaux entre eux.

Par ailleurs, ce dispositif présente un second inconvénient qui est lié au fait que les moyens de synchronisation du pignon fou du quatrième rapport sont mis en oeuvre dès la sélection du rapport du quatrième rapport de marche avant de marche avant ou dès la sélection du rapport de marche arrière. De ce fait, si le conducteur du véhicule tarde à engager le rapport, les moyens de synchronisation de synchronisation du pignon fou du quatrième rapport de marche avant restent sollicités, ce qui entraîne une usure accélérée du synchroniseur qui y est associé.

Pour remédier à cet inconvénient, on a proposé un dispositif générique du type de celui qui a été décrit et représenté dans le document DE-A1-3.600.185.

Ce document décrit et représente un dispositif de freinage de l'arbre primaire par les moyens de crabotage et de synchronisation d'un pignon fou de marche avant dans lequel ces moyens sont sollicités uniquement lors de l'engagement du rapport de marche arrière. Plus particulièrement, le baladeur associé au rapport de marche arrière et les moyens de crabotage et de synchronisation du pignon fou de marche avant comportent un dispositif à cliquet qui, seulement lors de l'engagement du rapport de marche arrière, entraîne partiellement en coulissement axial les moyens de crabotage et de synchronisation du pignon fou de marche avant pour freiner l'arbre primaire en synchronisant le pignon fou de marche avant sans le craboter. Ces moyens de crabotage et de synchronisation du pignon fou de marche avant comportent un coulisseau axial et un dispositif à cliquet qui est agencé entre le coulisseau axial et le baladeur associé au rapport de marche arrière. Le dispositif à cliquet comporte un levier escamotable qui est lié au coulisseau axial commandant les moyens de crabotage et de synchronisation du pignon fou de marche avant, et dont l'extrémité est susceptible de coopérer avec l'extrémité d'un levier qui s'étend radialement à partir de l'axe de rotation du baladeur avec lequel il est solidaire en pivotement.

L'invention propose une boîte de vitesses selon les caractéristiques de la revendication 1.

Selon d'autres caractéristiques de l'invention :
- l'engagement des moyens de crabotage axial du pignon intermédiaire de marche arrière sur les pignons fixes s'effectue axialement dans le même sens que l'engagement des moyens de crabotage et de synchronisation du pignon fou de marche avant,
- lors de l'engagement du rapport de marche arrière, la rotation du baladeur associé à l'engagement des moyens décrabotage du pignon intermédiaire de marche arrière provoque successivement une phase neutre dans laquelle le doigt n'est pas au contact du levier, une phase de synchronisation dans laquelle le doigt est au contact du levier et l'entraîne axialement en translation, pour mettre en oeuvre les moyens de synchronisation du pignon fou de marche avant, et une phase de crabotage, dans laquelle le doigt s'échappe du levier, le coulisseau commandant les moyens de crabotage et de synchronisation du pignon fou de marche avant revenant alors à une position de repos, et dans laquelle le pignon intermédiaire de marche arrière est craboté,
- lors du désengagement du rapport de marche arrière, la rotation inverse du baladeur associé à l'engagement des moyens de crabotage du pignon intermédiaire de marche arrière provoque successivement une phase de décrabotage du pignon intermédiaire de marche arrière, une phase d'escamotage, dans laquelle le doigt est au contact du levier et conduit le levier à s'escamoter sans solliciter les moyens de synchronisation du pignon fou de marche avant, et la phase neutre,
- la trajectoire de rotation du doigt autour de l'axe du baladeur associé au rapport de marche arrière coupe la trajectoire de translation du levier de façon qu'il existe au moins une course angulaire de contact du baladeur pour laquelle le doigt est susceptible de glisser le long du levier et dans laquelle le levier entraîne le coulisseau axial commandant les moyens de crabotage et de synchronisation du pignon fou de marche avant sur une partie de sa course correspondant seulement à la synchronisation du pignon fou de marche avant, le doigt s'échappant du levier en sortie de cette course angulaire de contact,
- le levier est porté par une première plaque qui s'étend à partir du coulisseau commandant les moyens de crabotage et de synchronisation du pignon fou de marche avant perpendiculairement à la direction transversale, et il comporte deux faces latérales opposées permettant un contact avec le doigt du baladeur,
- le levier est monté à rotation la première plaque autour d'un pivot d'axe transversal et il est rappelé élastiquement par un ressort contre une patte transversale formant butée de sorte qu'il n'est susceptible de s'escamoter que lorsque le doigt du baladeur le sollicite dans le sens du désengagement du rapport de marche arrière,
- le doigt cylindrique transversal du baladeur est un plot cylindrique qui est monté serré dans un perçage complémentaire d'une deuxième plaque qui s'étend à partir du baladeur, perpendiculairement à la direction transversale, en regard de la première plaque du coulisseau de marche avant contre laquelle elle est susceptible de coulisser lorsque le rapport de marche arrière est sélectionné,
- le baladeur associé au rapport de marche arrière comporte deux bras radiaux qui sont décalés transversalement et qui correspondent respectivement à deux positions transversales distinctes du baladeur suivant son axe de coulissement, lesquelles positions correspondent respectivement à la sélection des moyens de crabotage et de synchronisation du pignon fou de marche avant et à la sélection des moyens de crabotage du pignon intermédiaire de marche arrière.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée du dispositif à cliquet selon l'invention ;
- la figure 2 est une vue selon la figure 1 du dispositif à cliquet représenté assemblé ;
- la figure 3 est une vue axiale de dessus du dispositif à cliquet représenté à la limite de la phase neutre et de la phase de synchronisation ;
- la figure 3A est une vue de détail du doigt et du levier du dispositif à cliquet selon la figure 3 ;
- la figure 4 est une vue selon l'axe transversal du dispositif à cliquet représenté pendant la phase de synchronisation ;
- la figure 4A est une vue de détail du doigt et du levier du dispositif à cliquet selon la figure 5 ;
- la figure 5 est une vue selon l'axe transversal du dispositif à cliquet représenté à la limite de la phase de synchronisation et de la phase de crabotage ;
- la figure 5A est une vue de détail du doigt et du levier du dispositif à cliquet selon la figure 7 ;
- la figure 6 est une vue selon l'axe transversal du dispositif à cliquet représenté pendant la phase de crabotage ;
- la figure 7 est une vue selon l'axe transversal du dispositif à cliquet représenté à la limite de la phase de décrabotage et de la phase d'escamotage ;
- la figure 7A est une vue de détail du doigt et du levier du dispositif à cliquet selon la figure 10 ;
- la figure 8 est une vue selon l'axe transversal du dispositif à cliquet représenté pendant la phase d'escamotage ; et
- la figure 8A est une vue de détail du doigt et du levier du dispositif à cliquet selon la figure 12.

Dans la description qui va suivre, des chiffres de référence identiques désignent des pièces identiques ou ayant des fonctions similaires.

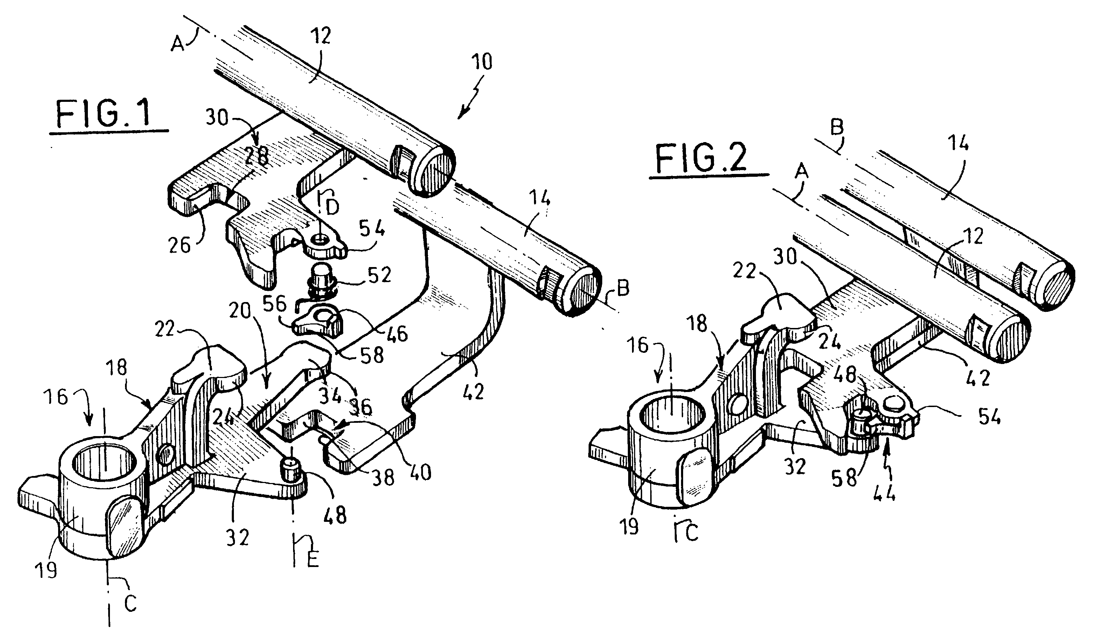

On a représenté aux figures 1 et 2 des moyens de commande 10 comportant des moyens de synchronisation et de crabotage d'un pignon fou de marche avant et d'un pignon intermédiaire de marche arrière d'une boîte de vitesses réalisée conformément à l'invention.

De manière connue, ces moyens de commande 10 comportent deux coulisseaux parallèles 12 et 14 qui sont montés coulissants dans un carter (non représenté) de la boîte de vitesses suivant deux axes parallèles respectifs A et B, parallèles aux arbres primaire et secondaire de la boîte de vitesses.

Le coulisseau 12 est en effet mobile en coulissement suivant l'axe A entre deux positions extrêmes, une position de repos représentée à la figure 1 dans laquelle les moyens de commande de synchronisation et de crabotage du pignon fou de marche avant ne sont pas mis en oeuvre, et une position avant de crabotage (non représentée), vers la droite sur la figure 1 , dans laquelle le coulisseau 12 est déplacé axialement en coulissement pour mettre en oeuvre successivement les moyens de synchronisation puis de crabotage du pignon fou de marche avant.

En effet, de manière connue, les moyens de synchronisation du pignon fou de marche avant associés au coulisseau 12 comportent conventionnellement une bague qui est liée au coulisseau 12 et qui, lorsque le coulisseau est déplacé suivant l'axe A vers l'avant, entraîne en coulissement sur l'arbre primaire de la boîte de vitesses un synchroniseur qui conduit le pignon fou de marche avant à tourner à la même vitesse de rotation que l'arbre primaire qui le porte. Puis, lorsque le coulisseau 12 est déplacé plus avant, la bague est elle aussi déplacée axialement plus en avant, ce qui conduit les moyens de crabotage du pignon fou de marche avant associés au coulisseau 12 à réaliser une liaison en rotation du pignon fou de marche avant avec l'arbre primaire.

D'une manière analogue, le coulisseau 14 est mobile en coulissement suivant l'axe B entre deux positions extrêmes, une position de repos représentée à la figure 1 dans laquelle les moyens de commande de crabotage du pignon fou de marche avant ne sont pas mis en oeuvre, et une position avant de crabotage (non représentée), vers la droite sur la figure 1, dans laquelle le coulisseau 14 est déplacé axialement en coulissement pour mettre en oeuvre les moyens de crabotage du pignon intermédiaire mobile de marche arrière.

En effet, de manière connue, les moyens de crabotage du pignon intermédiaire mobile de marche arrière associés au coulisseau 14 permettent conventionnellement de déplacer le pignon intermédiaire mobile, qui engrène avec un pignon fixe associé de l'arbre primaire, jusqu'à une position axiale de crabotage dans laquelle il engrène aussi avec un pignon fixe associé de l'arbre secondaire. Cette opération est rendue possible par le fait que le pignon intermédiaire mobile de marche arrière et les pignons fixes associés des arbres primaire et secondaire sont des pignons à denture droite, le coulissement axial du pignon mobile intermédiaire de marche arrière consistant en un glissement des dentures droites de ce pignon mobile intermédiaire sur les dentures droites des pignons fixes des arbres primaire et secondaire.

Dans le mode de réalisation préféré de l'invention, le coulissement axial des coulisseaux 12 et 14 suivant leurs axes respectifs A et B est commandé par un baladeur 16 commun qui est monté coulissant selon un axe C transversal qui est perpendiculaire aux axes A et B. Le baladeur 16 est aussi susceptible de pivoter autour de l'axe C.

Le baladeur 16 comporte deux bras radiaux 18 et 20 qui s'étendent radialement à partir d'un fût 19 du baladeur 16, qui sont décalés transversalement et qui sont destinés à coopérer respectivement avec les coulisseaux 12 et 14.

Avantageusement le baladeur 16 est réalisé par moulage, ce qui permet de réaliser en une seule pièce le fût 19 et les bras radiaux 18 et 20.

Le bras radial 18 comporte à son extrémité libre une touche 22 dont des flancs cylindriques 24 sont destinés à être reçus entre des flancs latéraux parallèles 26 d'une encoche 28 d'une première plaque 30, qui est liée rigidement au coulisseau 12 et qui s'étend parallèlement au coulisseau 12 et parallèlement à la direction radiale du bras 18.

Avantageusement, la première plaque 30 est soudée directement sur le coulisseau 12.

Ainsi, lorsque le coulisseau 12 est dans sa position de repos, ce qui correspond à une position de point mort de la boîte de vitesses, le baladeur 16 peut être amené dans une première position transversale sur l'axe C dans laquelle la touche 22 est reçue dans l'encoche 28 de la première plaque 30 liée au coulisseau 12.

Le bras radial 20 est porté par une deuxième plaque 32 qui est solidaire du baladeur 16. Avantageusement, la deuxième plaque 32 est réalisée venue de matière avec le fût 19 du baladeur 16.

Le bras radial 20 comporte à son extrémité une touche 34 dont des flancs cylindriques 36 sont destinés à être reçus entre des flancs latéraux parallèles 38 d'une encoche 40 d'une troisième plaque 42, qui est liée rigidement au coulisseau 14 et qui s'étend parallèlement par rapport au coulisseau 14 et parallèlement par rapport à la direction radiale du bras 20.

Avantageusement, la troisième plaque 42 est soudée directement sur le coulisseau 14.

Ainsi, lorsque le coulisseau 14 est dans sa position de repos, ce qui correspond aussi à la position de point mort de la boîte de vitesses, le baladeur 16 peut être amené dans une deuxième position transversale sur l'axe C dans laquelle la touche 34 est reçue dans l'encoche 40 de la troisième plaque 42 liée au coulisseau 14.

Les première et deuxième positions transversales du baladeur 26 correspondent aux sélections respectives du rapport de marche avant et du rapport de marche arrière.

L'engagement respectif du rapport de marche avant et du rapport de marche arrière est donc réalisé, dans chacune des positions de sélection choisies, par une rotation dans le sens horaire du baladeur 26 autour de l'axe C.

Conformément à l'invention, le baladeur 16 et le coulisseau 12 comportent un dispositif 44 à cliquet, représenté assemblé à la figure 2, qui, seulement lors de l'engagement du rapport de marche arrière, entraîne partiellement en coulissement axial le coulisseau 12 pour freiner l'arbre primaire en synchronisant le pignon fou de marche avant sans le craboter.

A cet effet, la première plaque 30 du coulisseau 12 porte un levier escamotable 46 qui est susceptible de coopérer avec un doigt 48 porté par la deuxième plaque 32 du baladeur 16.

Le levier escamotable 46 est monté à rotation sur la première plaque 30 autour d'un pivot 50 d'axe transversal D parallèle à l'axe C. Le pivot 50 est par exemple un plot cylindrique qui est monté serré dans un perçage complémentaire de la première plaque 30.

Le levier 46 est rappelé élastiquement par un ressort 52 à action angulaire contre une patte transversale 54 de la première plaque 30 qui est avantageusement réalisée venue de matière avec la première plaque 30, de sorte que le levier 46 n'est susceptible de pivoter autour du pivot 50 que lorsqu'il est sollicité vers l'arrière, c'est à dire vers la gauche sur la figure 1.

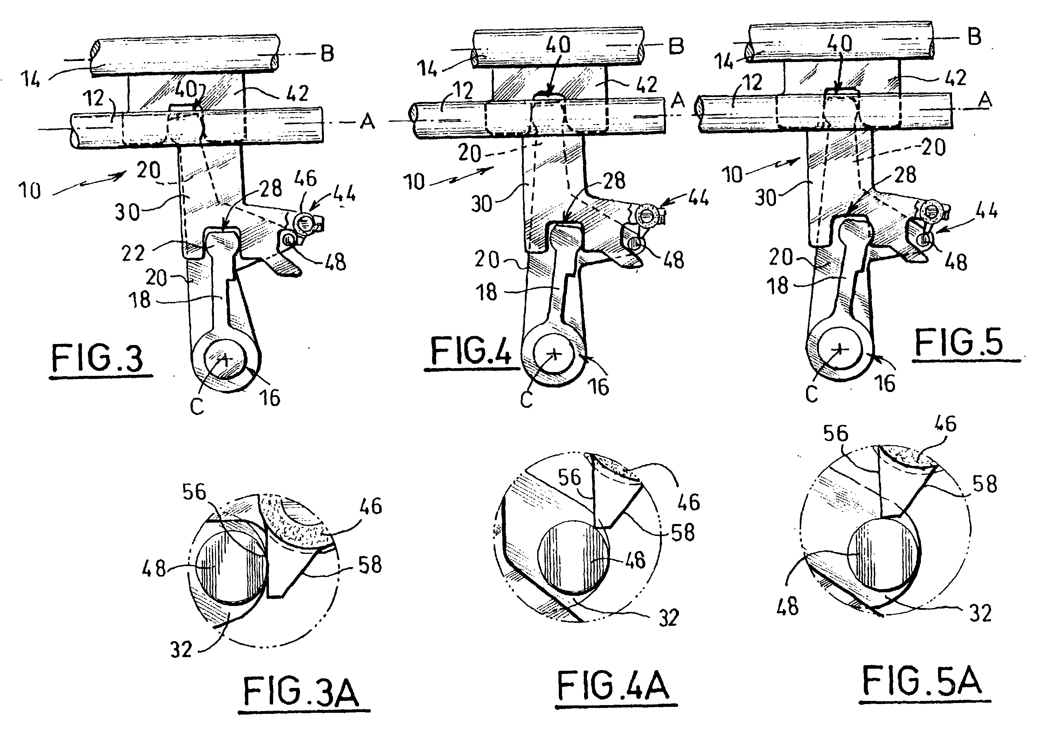

Le doigt 48 est aussi un plot cylindrique qui est monté serré dans un perçage complémentaire de la deuxième plaque 32 du baladeur 26. Le doigt 48 s'étend transversalement suivant un axe parallèle à l'axe C de façon à coopérer, pour certaines positions angulaires du baladeur 26, avec le levier 46, comme on le verra ultérieurement en référence aux figures 3 à 5 et 7 à 8.

A cet effet, le levier 46 comporte deux faces latérales arrière 56 et avant 58 qui, comme on le verra ultérieurement en références aux figures 3 à 5 et 7 à 8, permettent au doigt 48 de la deuxième plaque 32 de coopérer avec le levier 46.

On décrira à présent le fonctionnement du dispositif 44 à cliquet lors de l'engagement puis lors du désengagement d'un rapport de marche arrière.

Lorsque le conducteur du véhicule désire engager le rapport de marche arrière, il doit tout d'abord manoeuvrer un levier de commande des vitesses du véhicule qui est relié à une tringlerie (non représentée)qui est reliée au baladeur 16, pour sélectionner préalablement le rapport de marche arrière. Le baladeur 16 est alors manoeuvré en coulissement suivant l'axe C de façon que la touche 34 deuxième bras 20 du baladeur 16 soit reçue transversalement dans l'encoche 40 de la troisième plaque 42. Puis, par une action d'engagement du levier de commande des vitesses du véhicule (non représenté), il imprime au baladeur 16 une rotation dans le sens horaire, ce qui permet de déplacer axialement vers l'avant la troisième plaque 42 qui est liée au coulisseau 14 commandant les moyens de crabotage du rapport de marche arrière. Au cours de cette opération, le dispositif à cliquet 44 passe d'une phase neutre dans laquelle le doigt 48 n'est pas au contact du levier 46 à une phase de synchronisation dans laquelle le doigt 48 est au contact du levier 46 et le repousse vers l'avant.

La figure 3 représente le dispositif à cliquet 44 à la limite de la phase neutre et de la phase de synchronisation, le doigt 48 de la deuxième plaque 32 portant le deuxième bras 20 venant aborder, comme l'illustre la figure 3A, une face latérale arrière 56 du levier 46.

Dans cette configuration, lorsque le baladeur 16 poursuit sa rotation dans le sens horaire autour de l'axe C, le doigt 48 repousse le levier 46 en exerçant vers l'avant un effort de contact sensiblement perpendiculaire à la face latérale arrière 56 de celui-ci, comme illustré en référence aux figures 4 et 4A.

Le dispositif à cliquet est alors dans une phase de synchronisation dans laquelle le deuxième bras 20, en entraînant le coulisseau 14 afin de craboter ensuite le pignon intermédiaire mobile de marche arrière, entraîne aussi, par l'intermédiaire du levier 46, le coulisseau 12 sur une partie de sa course de façon à mettre en oeuvre les moyens de synchronisation du pignon fou de marche avant sans mettre en oeuvre les moyens de crabotage du pignon fou de marche avant. Au long de toute cette phase de synchronisation, le doigt 48 glisse le long de la face latérale arrière du levier 46, lequel est immobilisé en rotation autour de l'axe C par la patte transversale 54.

Puis, lorsque, comme illustré en référence aux figures 5 et 5A qui représentent le dispositif à cliquet 44 à la limite de la phase de synchronisation et d'une phase de crabotage, le baladeur 16 poursuit sa rotation dans le sens horaire autour de l'axe C. Le doigt 48 s'échappe de la face latérale arrière 56 du levier 48, en même temps que le deuxième bras 20 continue d'entraîner le coulisseau 14 axialement vers l'avant pour commander le crabotage du pignon intermédiaire mobile de marche arrière.

Le crabotage du pignon intermédiaire mobile de marche arrière est ainsi réalisé de façon silencieuse tandis que l'arbre primaire a été préalablement freiné par la mise en oeuvre des moyens de synchronisation du pignon fou de marche avant.

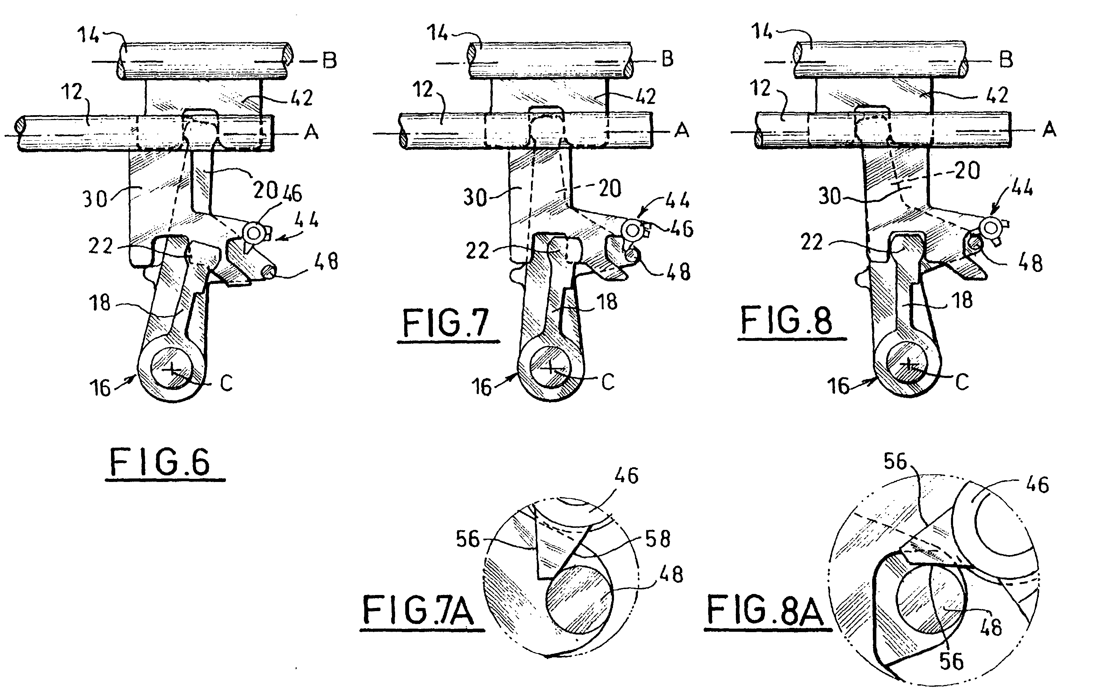

Avantageusement, comme l'illustre les figures 5, 5A et 6, dès que le doigt 48 s'est échappé de la face latérale arrière 56 du levier 46, les moyens de synchronisation du pignon fou de marche avant ne sont plus mis en oeuvre et reviennent dans leur position de repos. Ceci peut, par exemple être obtenu par une bague élastique (non représentée) agencée conventionnellement à l'intérieur du synchroniseur du pignon fou de marche avant.

Avantageusement, dans un mode de réalisation préféré de l'invention, la position angulaire du baladeur pour laquelle le doigt 48 s'échappe du levier 46 correspond à la position angulaire du baladeur pour laquelle le pignon intermédiaire mobile de marche arrière commence à être craboté.

Lorsque le conducteur du véhicule désire désengager le rapport de marche arrière, il doit manoeuvrer le levier de commande des vitesses du véhicule de façon à imprimer une rotation inverse au baladeur 16 autour de son axe C, c'est-à-dire une rotation dans le sens anti-horaire.

La figure 7 représente une phase de décrabotage du pignon intermédiaire mobile de marche arrière dans laquelle le baladeur pivote dans le sens opposé anti-horaire de façon que le doigt 48 soit ramené au contact du levier 46, et plus particulièrement au contact de la face latérale avant 58 du levier 46.

Dans cette configuration, le deuxième bras 20 repousse le coulisseau 14 du pignon intermédiaire mobile de marche arrière de sorte que les moyens de crabotage du pignon intermédiaire mobile de marche arrière ne sont plus mis en oeuvre.

Comme les moyens de synchronisation et de crabotage du pignon fou et de crabotage du pignon intermédiaire mobile ne peuvent être mis en oeuvre que pour un même sens de rotation du baladeur, il importe que les moyens de synchronisation et de crabotage du pignon fou, qui sont au repos, ne soient pas sollicités.

Ainsi, lors du décrabotage du pignon intermédiaire mobile de marche arrière, le dispositif à cliquet 44 permet avantageusement que le deuxième bras 20 entraîne seulement le coulisseau 14 lié au pignon intermédiaire mobile de marche arrière sans entraîner le coulisseau 12 lié aux moyens de synchronisation et de crabotage du pignon fou de marche avant.

En effet, comme l'illustrent les figures 8 et 8A, lorsque le baladeur est pivoté autour de l'axe C dans le sens anti-horaire, le doigt 48 repousse la face latérale avant 58 du levier 46 à l'encontre du ressort de rappel 52 et amène le levier 46 à s'escamoter en pivotant autour de son axe D, ce qui permet au levier 46 de s'escamoter au passage du doigt 48 sans entraîner le coulisseau 12. Enfin, lorsque le baladeur 16 a terminé sa rotation inverse dans le sens anti-horaire et sa translation inverse vers le point mort, le dispositif 44 est ramené dans sa position de repos qui est représentée à la figure 2.

La boîte de vitesses selon l'invention permet donc de réaliser avantageusement la synchronisation d'un rapport de marche arrière en utilisant des éléments préexistants de la boîte de vitesses, ce qui permet avantageusement de ne pas ajouter de dispositif de synchronisation spécifique au pignon intermédiaire mobile de marche arrière, de réaliser un dispositif de synchronisation du pignon de marche arrière fiable, et de réduire les coûts de fabrication d'une telle boîte.

## Revendications

1. Boîte de vitesses d'automobile à au moins deux arbres parallèles axiaux primaire et secondaire, comportant au moins un pignon fou qui est susceptible d'être synchronisé puis accouplé en rotation à l'arbre primaire par des moyens de crabotage et de synchronisation à coulissement axial pour définir un rapport de marche avant, au moins un pignon fixe qui est destiné à engrener avec un pignon fixe de l'arbre secondaire par l'intermédiaire d'un pignon intermédiaire mobile comportant des moyens de crabotage, un baladeur (16) associé au rapport de marche arrière qui est monté coulissant et pivotant suivant une direction transversale (C) pour qu'au moins un bras radial (20) du baladeur (16) sélectionne en coulissant et engage en pivotant le rapport de marche arrière en coopérant avec les moyens de crabotage du pignon intermédiaire, le baladeur (16) associé au rapport de marche arrière et les moyens de crabotage et de synchronisation du pignon fou de marche avant comportant un dispositif (44) à cliquet qui entraîne partiellement en coulissement axial un coulisseau (12) de commande des moyens de crabotage et de synchronisation du pignon fou de marche avant sans le craboter seulement lors de l'engagement du rapport de marche arrière, le dispositif (44) à cliquet comportant un levier (46) escamotable qui est lié au coulisseau (12) axial, et qui est susceptible de coopérer avec un doigt (48) porté par le baladeur (16) associé au rapport de marche arrière,
**caractérisée en ce que** ledit doigt (48) est cylindrique et s'étend transversalement suivant un axe parallèle à l'axe (C) du baladeur.

2. Boîte de vitesses selon la revendication précédente, **caractérisée en ce que** l'engagement des moyens de crabotage axial du pignon intermédiaire de marche arrière sur les pignons fixes s'effectue axialement dans le même sens que l'engagement des moyens de crabotage et de synchronisation du pignon fou de marche avant.

3. Boîte de vitesses selon la revendication précédente, **caractérisée en ce que**, lors de l'engagement du rapport de marche arrière, la rotation du baladeur (16) associé à l'engagement des moyens de crabotage du pignon intermédiaire de marche arrière provoque successivement :
- une phase neutre dans laquelle le doigt (48) n'est pas au contact du levier (46),
- une phase de synchronisation dans laquelle le doigt (48) est au contact du levier (46) et l'entraîne axialement en translation, pour mettre en oeuvre les moyens de synchronisation du pignon fou de marche avant, et
- une phase de crabotage, dans laquelle le doigt (48) s'échappe du levier (46), le coulisseau (12) commandant les moyens de crabotage et de synchronisation du pignon fou de marche avant revenant alors à une position de repos, et dans laquelle le pignon intermédiaire de marche arrière est craboté.

4. Boîte de vitesses selon la revendication précédente, **caractérisée en ce que**, lors du désengagement du rapport de marche arrière, la rotation inverse du baladeur (16) associé à l'engagement des moyens de crabotage du pignon intermédiaire de marche arrière provoque successivement :
- une phase de décrabotage du pignon intermédiaire de marche arrière,
- une phase d'escamotage, dans laquelle le doigt (46) est au contact du levier (48) et conduit le levier (48) à s'escamoter sans solliciter les moyens de synchronisation du pignon fou de marche avant, et
- la phase neutre.

5. Boîte de vitesses selon l'une quelconque des revendications 2 à 4, **caractérisée en ce que** la trajectoire de rotation du doigt (48) autour de l'axe (C) du baladeur (16) associé au rapport de marche arrière coupe la trajectoire de translation du levier (46) de façon qu'il existe au moins une course angulaire de contact du baladeur (16) pour laquelle le doigt (48) est susceptible de glisser le long du levier (46) et dans laquelle le levier (46) entraîne le coulisseau (12) axial commandant les moyens de crabotage et de synchronisation du pignon fou de marche avant sur une partie de sa course correspondant seulement à la synchronisation du pignon fou de marche avant, le doigt (48) s'échappant du levier (46) en sortie de cette course angulaire de contact.

6. Boîte de vitesses selon la revendication précédente, **caractérisée en ce que** le levier (46) est porté par une première plaque (30) qui s'étend à partir du coulisseau (12) commandant les moyens de crabotage et de synchronisation du pignon fou de marche avant perpendiculairement à la direction transversale, et **en ce qu'**il comporte deux faces latérales (56, 58) opposées permettant un contact avec le doigt (48) du baladeur (16).

7. Boîte de vitesses selon la revendication précédente, **caractérisée en ce que** le levier (46) est monté à rotation sur la première plaque (30) autour d'un pivot d'axe transversal et **en ce qu'**il est rappelé élastiquement par un ressort (52) contre une patte transversale (54) formant butée de sorte qu'il n'est susceptible de s'escamoter que lorsque le doigt (48) du baladeur le sollicite dans le sens du désengagement du rapport de marche arrière.

8. Boîte de vitesses selon la revendication précédente, **caractérisée en ce que** le doigt (48) cylindrique transversal du baladeur (16) est un plot cylindrique qui est monté serré dans un perçage complémentaire d'une deuxième plaque (32) qui s'étend à partir du baladeur (16), perpendiculairement à la direction transversale, en regard de la première plaque (30) du coulisseau (12) de marche avant contre laquelle elle est susceptible de coulisser lorsque le rapport de marche arrière est sélectionné.

9. Boîte de vitesses selon l'une quelconque des revendications précédentes, **caractérisée en ce que** le baladeur (16) associé au rapport de marche arrière comporte deux bras radiaux (18, 20) qui sont décalés transversalement et qui correspondent respectivement à deux positions transversales distinctes du baladeur (16) suivant son axe (C) de coulissement, lesquelles positions correspondent respectivement à la sélection des moyens de crabotage et de synchronisation du pignon fou de marche avant et à la sélection des moyens de crabotage du pignon intermédiaire de marche arrière.

## Patentansprüche

1. Wechselgetriebe eines Automobils mit mindestens zwei parallelen, axialen, primären und sekundären Wellen, welches mindestens ein bewegliches Ritzel aufweist, welches fähig ist, synchronisiert zu werden, dann in Drehung mit der primären Welle mittels Klauenkupplungs- und Synchronisationsmittel bei axialem Gleiten angekuppelt zu werden, um einen Vorwärtsgang zu definieren, mindestens ein festes Ritzel, welches dafür bestimmt ist, mit einem festen Ritzel der sekundären Welle unter Zwischenschalten eines beweglichen Zwischenritzels ineinander zu greifen, welches Klauenkupplungsmittel aufweist, eine Schiebewelle (16), welche zu dem Rückwärtsgang gehört, welche gleitend und schwenkend gemäß einer transversalen Richtung (C) montiert ist, so dass mindestens ein radialer Arm (20) der Schiebewelle (16) den Rückwärtsgang in Gleiten auswählt und in Schwenken in Eingriff bringt unter Zusammenwirken mit den Klauenkupplungsmitteln des Zwischenritzels, wobei die Schiebewelle (16), welche zu dem Rückwärtsgang gehört, und die Klauenkupplungsund Synchronisationsmittel des beweglichen Ritzels des Vorwärtsgangs eine Sperrklinkenvorrichtung (44) aufweisen, welche ein Steuer-Gleitstück (12) der Klauenkupplungs- und Synchronisationsmittel des beweglichen Ritzels des Vordergangs antreibt, ohne es formschlüssig zu umgreifen lediglich während dem Eingreifen des Rückwärtsgangs, wobei die Sperrklinkenvorrichtung (44) einen einziehbaren Hebel (46) aufweist, welcher mit dem axialen Gleitstück (12) verbunden ist, und welcher fähig ist, mit einem Finger (48) zusammenzuwirken, welcher von der Schiebewelle (16) getragen wird, die zu dem Rückwärtsgang gehört,
**dadurch gekennzeichnet, dass** der Finger (48) zylindrisch ist und sich transversal gemäß einer Achse, parallel zu der Achse (C) der Schiebewelle, erstreckt.

2. Wechselgetriebe nach dem vorhergehenden Anspruch, **dadurch gekennzeichnet, dass** der Eingriff der axialen Klauenkupplungsmittel des Zwischenritzels des Rückwärtsgangs auf den festen Ritzeln axial in der gleichen Richtung wie der Eingriff der Klauenkupplungs- und Synchronisationsmittel des beweglichen Ritzels des Vorwärtsgangs erfolgt.

3. Wechselgetriebe nach dem vorhergehenden Anspruch, **dadurch gekennzeichnet, dass** während dem Eingreifen des Rückwärtsgangs die Drehung der Schiebewelle (16), welche zu dem Eingriff der Klauenkupplungsmittel des Zwischenritzels des Rückwärtsgangs gehört, aufeinander folgend hervorruft:
- eine neutrale Phase, in welcher der Finger (48) nicht in Kontakt mit dem Hebel (46) ist,
- eine Synchronisationsphase, in welcher der Finger (48) in Kontakt mit dem Hebel (46) ist und ihn axial in Translation antreibt, um die Synchronisationsmittel des beweglichen Ritzels des Vorwärtsgangs umzusetzen, und
- eine Klauenkupplungsphase, in welcher der Finger (48) von dem Hebel (46) weggeht, wobei das Gleitstück (12) die KJauenkupplungs- und Synchronisationsmittel des beweglichen Ritzels des Vorwärtsgangs steuert, die somit in eine Ruheposition zurückkehren, und in welcher das Zwischenritzel des Rückwärtsgangs klauenmäßig in Eingriff ist.

4. Wechselgetriebe nach dem vorhergehenden Anspruch, **dadurch gekennzeichnet, dass** während dem Ausrücken des Rückwärtsgangs die umgekehrte Drehung der Schiebewelle (16), welche zu dem Eingriff der Klauenkupplungsmittel des Zwischenritzels des Rückwärtsgangs gehört, aufeinander folgend hervorruft:
- eine Entkupplungsphase des Zwischenritzels des Rückwärtsgangs,
- eine Einziehungsphase, in welcher der Finger (46) mit dem Hebel (48) in Kontakt ist und den Hebel (48) führt, sich einzuziehen, ohne die Synchronisationsmittel des beweglichen Ritzels des Vorwärtsgangs zu belasten, und
- die neutrale Phase.

5. Wechselgetriebe gemäß irgendeinem der Ansprüche 2 bis 4, **dadurch gekennzeichnet, dass** die Bahn der Drehung des Fingers (48) um die Achse (C) der Schiebewelle (16), welche zu dem Rückwärtsgang gehört, die Bahn der Translation des Hebels (46) in einer Weise schneidet, dass mindestens ein winkelmäßiger Hub eines Kontakts der Schiebewelle (16) besteht, aufgrund von welchem der Finger (48) fähig ist, entlang dem Hebel (46) zu gleiten, und in welchem der Hebel (46) das axiale Gleitstück (12) antreibt, wobei die Klauenkupplungs- und Synchronisationsmittel des beweglichen Ritzels des Vorwärtsgangs über einen Teil seines Hubs, der lediglich der Synchronisation des beweglichen Ritzels des Vorwärtsgangs entspricht, steuert, wobei der Finger (48) von dem Hebel (46) bei Verlassen dieses winkelmäßigen Kontakthubs vom Hebel (46) weggeht.

6. Wechselgetriebe nach dem vorhergehenden Anspruch, **dadurch gekennzeichnet, dass** der Hebel (46) durch eine erste Platte (30) getragen wird, die sich ausgehend von dem Gleitstück (12) erstreckt, welche die Klauenkupplungs- und Synchronisationsmittel des beweglichen Ritzels des Vorwärtsgangs rechtwinklig zu der transversalen Richtung steuert und dass er zwei seitliche, gegenüberliegende Flächen (56, 58) aufweist, welche einen Kontakt mit dem Finger (48) der Schiebewelle (16) ermöglichen.

7. Wechselgetriebe nach dem vorhergehenden Anspruch, **dadurch gekennzeichnet, dass** der Hebel (46) in Drehung an der ersten Platte (30) um einen Drehzapfen einer transversalen Achse montiert ist und dass er elastisch durch eine Feder (52) gegen eine transversale Lasche (54) zurückgezogen wird, welche einen Anschlag in einer Weise bildet, dass er nicht fähig ist, sich zurückzuziehen, nur wenn der Finger (48) der Schiebewelle ihn in der Richtung des Herausgehens des Rückwärtsgangs belastet.

8. Wechselgetriebe nach dem vorhergehenden Anspruch, **dadurch gekennzeichnet, dass** der zylindrische, transversale Finger (48) der Schiebewelle (16) ein zylindrischer Klotz ist, welcher gepresst montiert ist in einer komplementären Bohrung einer zweiten Platte (32), welche sich ausgehend von der Schiebewelle (16) erstreckt, rechtwinklig zu der transversalen Richtung in Bezug zu der ersten Platte (30) des Gleitstücks (12) des Vorwärtsgangs, gegen welche er fähig ist zu gleiten, wenn der Rückwärtsgang ausgewählt ist.

9. Wechselgetriebe nach dem vorhergehenden Anspruch, **dadurch gekennzeichnet, dass** die Schiebewelle (16), welche zu dem Rückwärtsgang gehört, zwei radiale Arme (18, 20) aufweist, welche transversal versetzt sind und welche jeweils zwei unterschiedlichen, transversalen Positionen der Schiebewelle (16) gemäß ihrer Gleitachse (C) entsprechen, wobei die Positionen jeweils der Auswahl der Klauenkupplungs- und Synchronisationsmittel des beweglichen Ritzels des Vorwärtsgangs und der Auswahl der Klauenkupplungsmittel des Zwischenritzels des Rückwärtsgangs entsprechen.

## Claims

1. A motor vehicle gearbox having at least two, primary and secondary, axial parallel shafts, comprising at least one idle pinion which is capable of being synchronised and then coupled in respect of rotation to the primary shaft by dog engagement and synchronisation means involving axial sliding movement to define a forward gear ratio, at least one fixed pinion which is intended to mesh with a fixed pinion of the secondary shaft by way of a mobile intermediate pinion comprising dog engagement means, a selector member (16) associated with the reverse gear ratio which is mounted slidably and pivotably in a transverse direction (C) so that at least one radial arm (20) of the selector member (16) selects by sliding and engages by pivoting the reverse gear ratio by co-operating with the dog engagement means of the intermediate pinion, the selector member (16) associated with the reverse gear ratio and the means for dog engagement and synchronisation of the idle forward gear pinion comprising a pawl device (44) which partially entrains in axial sliding movement a slider (12) for controlling the means for dog engagement and synchronisation of the idle forward gear pinion without dog engagement thereof only upon engagement of the reverse gear ratio, the pawl device (44) comprising a retractable lever (46) which is connected to the axial slider (12) and which is capable of co-operating with a finger (48) carried by the selector member (16) associated with the reverse gear ratio, **characterised in that** said finger (48) is cylindrical and extends transversely in the direction of an axis parallel to the axis (C) of the selector member.

2. A gearbox according to the preceding claim **characterised in that** engagement of the means for axial dog engagement of the intermediate reverse gear pinion with the fixed pinions is effected axially in the same direction as engagement of the means for dog engagement and synchronisation of the idle forward gear pinion.

3. A gearbox according to the preceding claim **characterised in that**, upon engagement of the reverse gear ratio, the rotation of the selector member (16) associated with engagement of the means for dog engagement of the intermediate reverse gear pinion successively causes:
- a neutral phase in which the finger (48) is not in contact with the lever (46),
- a synchronisation phase in which the finger (48) is in contact with the lever (46) and entrains it axially in a translatory movement to bring into operation the means for synchronisation of the idle forward gear pinion, and
- a dog engagement phase in which the finger (48) escapes from the lever (46), the slider (12) controlling the means for dog engagement and synchronisation of the idle forward gear pinion then returning to a rest position and in which the intermediate reverse gear pinion is in dog-engagement.

4. A gearbox according to the preceding claim **characterised in that**, upon disengagement of the reverse gear ratio, the reverse rotation of the selector member (16) associated with engagement of the means for dog engagement of the intermediate reverse gear pinion successively causes:
- a phase of dog disengagement of the intermediate reverse gear pinion,
- a retraction phase in which the finger (46) is in contact with the lever (48) and causes the lever (48) to retract without acting on the means for synchronisation of the idle forward gear pinion, and
- the neutral phase.

5. A gearbox according to any one of claims 2 to 4 **characterised in that** the path of rotation of the finger (48) around the axis (C) of the selector member (16) associated with the reverse gear ratio intersects the path of translatory movement of the lever (46) so that there is at least one angular contact travel of the selector member (16) in which the finger (48) is capable of sliding along the lever (46) and in which the lever (46) entrains the slider (12) axially controlling the means for dog engagement and synchronisation of the idle forward gear pinion over a part of its travel corresponding only to synchronisation of the idle forward gear pinion, the finger (48) escaping from the lever (46) at the exit from said angular contact travel.

6. A gearbox according to the preceding claim **characterised in that** the lever (46) is carried by a first plate (30) which extends from the slider (12) controlling the means for dog engagement and synchronisation of the idle forward gear pinion perpendicularly to the transverse direction, and that it comprises two opposite lateral faces (56, 58) permitting contact with the finger (48) of the selector member (16).

7. A gearbox according to the preceding claim **characterised in that** the lever (46) is mounted rotatably on the first plate (30) about a pivot with a transverse axis and that it is resiliently urged by a spring (52) against a transverse lug (54) forming an abutment so that it is capable of retracting only when the finger (48) of the selector member acts on it in the direction of disengagement of the reverse gear ratio.

8. A gearbox according to the preceding claim **characterised in that** the transverse cylindrical finger (48) of the selector member (16) is a cylindrical stud which is mounted clamped in a complementary opening in a second plate (32) which extends from the selector member (16) perpendicularly to the transverse direction facing the first plate (30) of the forward gear slider (12) against which it is capable of sliding when the reverse gear ratio is selected.

9. A gearbox according to any one of the preceding claims **characterised in that** the selector member (16) associated with the reverse gear ratio comprises two radial arms (18, 20) which are displaced transversely and which respectively correspond to two distinct transverse positions of the selector member (16) in the direction of its axis (C) of sliding movement, which positions respectively correspond to selection of the means for dog engagement and synchronisation of the idle forward gear pinion and selection of the means for dog engagement of the intermediate reverse gear pinion.
